# EUROPÄISCHE PATENTSCHRIFT

(11) **EP 3 721 100 B1**
(45) Veröffentlichungstag und Bekanntmachung des Hinweises auf die Patenterteilung: **24.04.2024**
(21) Anmeldenummer: 18808344.8
(22) Anmeldetag: 26.11.2018
(51) Int. Cl.: F16B 5/10, B65G 21/00, F16B 5/12, F16B 7/20, F16B 21/02, F16B 5/06

(54) **VERBINDUNGSANORDNUNG**
CONNECTION ASSEMBLY
ENSEMBLE DE LIAISON

(30) Priorität: 08.12.2017 DE 102017129301
(43) Veröffentlichungstag der Anmeldung: 14.10.2020
(73) Patentinhaber: KHS GmbH, 44143 Dortmund (DE)
(72) Erfinder: GRÄVINGHOLT, Stefan, 58454 Witten (DE); GREIVING, Thomas, 59348 Lüdinghausen (DE); PAROTH, Berthold, 44289 Dortmund (DE); SARAJLIJA, Zlatko, 44369 Dortmund (DE); STIENEN, Thomas, 59425 Unna (DE)
(86) Internationale Anmeldenummer: PCT/EP2018/082525
(87) Internationale Veröffentlichungsnummer: WO 2019/110348

(56) Entgegenhaltungen:
- EP-A2- 0 466 504
- WO-A1-2017/187464
- DE-A1- 2 237 223
- DE-A1- 10 144 982
- DE-B- 1 286 728
- FR-A1- 2 721 074
- US-A1- 2004 126 183
- US-A1- 2006 278 591
- US-A1- 2010 290 863

## Beschreibung

Die Erfindung bezieht sich auf eine Anordnung zur lösbaren Verbindung von wenigstens zwei Bauteilen mittels einer Befestigungseinrichtung gemäß dem Oberbegriff des Patentanspruches 1.

Beispielsweise werden in der Getränkeindustrie Transportvorrichtungen bzw. Transporteure zum Transportieren von Stückgütern mit einer Vielzahl von jeweils eine geschlossene Schlaufe bildenden und umlaufend angetriebenen Transportelementen, insbesondere auch in Form von Transportketten oder Scharnierbandketten, verwendet, die dem einschlägigen Fachmann hinlänglich bekannt sind. Die Transportelemente bilden jeweils mit ihrer oberen, sich gegen wenigstens eine Gleitführung abstützenden Länge die gemeinsame horizontale oder im Wesentlichen horizontale Transportebene oder -fläche, auf die das Stückgut mit seinem Stückgutboden oder seinem Standboden aufsteht.

Bei den Transportvorrichtungen handelt es sich dabei insbesondere um solche der Getränkeindustrie, die beispielsweise eine Leistung von mehr als 10000, bevorzugt von mehr als 50000 beförderten Stückgütern, beispielsweise Behältern, pro Stunde erzielen.

Weiterhin weisen derartige Transportvorrichtungen üblicherweise ein Gerüst bzw. einen Maschinenrahmen auf, an dem die Transportelemente gehalten und/oder geführt sind. Einzelne Gerüste sind dabei in der Regel an bestimmte Rastermaße hinsichtlich ihrer jeweiligen Länge und/oder Breite angepasst, so dass einzelne Gerüste kombiniert werden können und die einzelnen Maschinen einer Gesamtproduktionsanlage innerhalb der Getränkeindustrie miteinander verbindbar sind. Ferner weisen die Gerüste einen Grundkörper auf, an dem Profilelemente wie beispielsweise M-Profile, U-Profile, Flachprofile, Rohrprofile insbesondere jedoch C-Profil-Elemente, angeordnet sind. An der Oberseite dieser Profilelemente verlaufen die Transportelemente, vorzugsweise die Transportketten, wobei diese durch Antriebsmotoren endlos umlaufend bewegt werden und dabei auf den Profilelementen gleiten.

Ebenfalls ist es bekannt, zur Herabsetzung des Reibungskoeffizienten zwischen den Profilelementen und den Transportelementen Gleitelemente, insbesondere Gleitleisten, vorzusehen, die einen geringen Reibungskoeffizienten aufweisenden Belag für die Transportelemente ausbilden, um dadurch den Verschleiß an und die erforderlichen Antriebskräfte für die Transportelemente zu reduzieren.

Dabei werden im Stand der Technik die einzelnen Bauteile des Gerüstes mittels Schraubverbindungen miteinander verbunden, was sehr zeitaufwändig und somit teuer ist.

Aus der Druckschrift US 2004/126183 A1 ist ein Baugruppenelement zum Zusammenbauen eines ersten und zweiten flachen Werkzeugs bekannt geworden, wobei jedes Werkzeug eine der Innenseite des anderen Werkzeugs gegenüberliegende Innenseite aufweist und jedes Werkzeug eine der Außenseite gegenüberliegende Außenseite aufweist. Diese Druckschrift zeichnet sich insbesondere dadurch aus, dass eine zylindrische Einheit mit einer Rotationsachse sowie Elementen mit Öffnungen an der zylindrischen Einheit vorgesehen sind, die jeweils zusammenwirken und so geformt sind, dass diese eine feste Kombination der zylindrischen Einheit und der Werkzeuge durch relative Drehung zwischen dem zylindrischen Element und dem Werkzeug von ermöglichen weniger als 360 ° ermöglichen.

Ferner ist aus der Druckschrift DE 22 37 223 A1 eine Befestigungselement zur Befestigung eines eine hinterschnittene Ausnehmung aufweisenden Teils, insbesondere eines Stoßleistenprofils, an einem mit einer Öffnung versehenen Teil, insbesondere Stoßstange, bekannt geworden. Diese Druckschrift zeichnet sich dabei insbesondere dadurch aus, dass das Befestigungselement einen mit mindestens einen Außengewindegang versehenen, sich in die Öffnung einschraubenden Schraubenbereich und einen daran anschließenden, sich in die hinterschnittene Ausnehmung einlagernden Haltebereich aufweist.

Ausgehend hiervon liegt der vorliegenden Erfindung die Aufgabe zu Grunde, eine Anordnung zur lösbaren Verbindung von wenigstens zwei Bauteilen mittels einer Befestigungseinrichtung bereitzustellen, die die vorgenannten Nachteile vermeidet und hierbei insbesondere eine einfache und gleichzeitig zuverlässig stabile Verbindung von zwei Bauteilen ermöglicht. Diese Aufgabe wird mit den Merkmalen des Patentanspruches 1 gelöst. Die Unteransprüche betreffen dabei besonders bevorzugte Ausführungsvarianten der Erfindung.

Der wesentliche Aspekt gemäß der Anordnung zur lösbaren Verbindung von wenigstens zwei Bauteilen mittels einer Befestigungseinrichtung besteht dabei darin, dass das erste Bauteil zur lösbar klemmenden Befestigung zumindest in einem zumindest abschnittsweise flachen Abschnitt eine von der Kreisform abweichende Vorlochung oder Öffnung aufweist, dessen Querschnitt an den Längsschnitt des ersten Verriegelungsabschnitts angepasst ist, und zwar derart, dass der erste Verriegelungsabschnitt durch die Vorlochung hindurchführbar ist und die Befestigungseinrichtung durch Verdrehung um die Mittellängsachse mit dem ersten Befestigungsabschnitt an dem ersten Bauteil klemmend befestigbar ist, oder dass das erste Bauteil zumindest einen eine Ausnehmung ausbildenden Profilierungsabschnitt aufweist, dessen Querschnitt an den Längsschnitt des Verriegelungsabschnitt angepasst ist, und zwar derart, dass zur lösbar klemmenden Befestigung des ersten Befestigungsabschnittes am ersten Bauteil durch Verdrehung des ersten Verriegelungsabschnittes um die Mittelängsachse der erste Verriegelungsabschnitt zumindest abschnittsweise formschlüssig in der Ausnehmung aufnehmbar ist. Besonders vorteilhaft können damit das erste und zweite Bauteil ohne Verwendung einer Schraubverbindung verbunden werden. Durch die klemmende Befestigung wird zudem eine besonders stabile und lagefixierte Verbindung der beiden Bauteile zueinander erreicht.

Gemäß einer vorteilhaften nicht-erfindungsgemäßen Ausführungsvariante kann vorgesehen sein, dass der zweite Befestigungsabschnitt einen freiendseitigen zweiten Verriegelungsabschnitt aufweist und dass das zweite Bauteil zur lösbar klemmenden Befestigung zumindest in einem zumindest abschnittsweise flachen Abschnitt eine von der Kreisform abweichende Vorlochung oder Öffnung aufweist, dessen Querschnitt an den Längsschnitt des zweiten Verriegelungsabschnitts angepasst ist, und zwar derart, dass der zweite Verriegelungsabschnitt durch die Vorlochung hindurchführbar ist und die Befestigungseinrichtung durch Verdrehung um die Mittelängsachse mit dem zweiten Befestigungsabschnitt am zweiten Bauteil klemmend befestigbar ist.

Erfindungsgemäß ist vorgesehen, dass der zweite Befestigungsabschnitt den freiendseitigen zweiten Verriegelungsabschnitt aufweist und dass das zweite Bauteil zumindest einen eine Ausnehmung ausbildenden Profilierungsabschnitt aufweist, dessen Querschnitt an den Querschnitt des zweiten Verriegelungsabschnitts angepasst ist, und zwar derart, dass zur lösbar klemmenden Befestigung des zweiten Befestigungsabschnittes am zweiten Bauteil durch Verdrehung des zweiten Verriegelungsabschnittes um die Mittelängsachse der zweite Verriegelungsabschnitt zumindest abschnittsweise formschlüssig in der Ausnehmung aufnehmbar ist.

Erfindungsgemäß ist vorgesehen, dass der erste Befestigungsabschnitt den freiendseitigen ersten Verriegelungsabschnitt mit zumindest einen sich radial von der Mittellängsachse nach außen erstreckenden Verriegelungselement aufweist.

Gemäß einer nochmals weiteren vorteilhaften Ausführungsvariante kann vorgesehen sein, dass der erste Befestigungsabschnitt einen sich an den freiendseitigen ersten Verriegelungsabschnitt entlang der Mittellängsachse daran anschließenden ersten Anlageabschnitt aufweist, der eine sich senkrecht zur Mittellängsachse erstreckende Aufnahmenut ausbildet.

Gemäß einer nochmals weiteren vorteilhaften Ausführungsvariante kann vorgesehen sein, dass die Aufnahmenut zumindest teilweise umlaufend, vorzugsweise vollumlaufend, um die Mittellängsachse ausgebildet ist und an dem dem ersten Bauteil zugewandten Flächenabschnitt eine Anlagefläche ausbildet.

Gemäß einer nochmals weiteren vorteilhaften Ausführungsvariante kann vorgesehen sein, dass in einer Verriegelungsposition das wenigstens eine Verriegelungselement durch die Vorlochung hindurchgeführt ist und die Befestigungseinrichtung relativ zum ersten Bauteil um einen Winkel aus einer Freigabeposition in die Verriegelungsposition verdreht ist, und zwar derart, dass das wenigstens eine Verriegelungselement die Vorlochung in der Verriegelungsposition hintergreift und sich an dem flachen Abschnitt auf der dem zweiten Befestigungsabschnitt abgewandten Seite zumindest teilumfänglich um die Vorlochung herum an dem flachen Abschnitt abstützt.

Dabei beträgt der Winkel um den die Befestigungseinrichtung verdreht ist 20 - 90 Grad, besonders bevorzugt beträgt der Winkel 40 Grad.

Gemäß einer nochmals weiteren vorteilhaften Ausführungsvariante kann vorgesehen sein, dass das wenigstens eine Verriegelungselement durch die Drehung des ersten Verriegelungsabschnitts zur klemmenden sowie kontaktschlüssigen Anlage an dem flachen Abschnitt des ersten Bauteils auf der dem zweiten Befestigungsabschnitt abgewandten Seite gelangt, und zwar derart, dass das erste Bauteil in dem flachen Abschnitt auf der dem zweiten Befestigungsabschnitt zugewandten Seite gegen die Anlagenfläche der Aufnahmenut gedrückt ist und der flache Abschnitt zwischen der Anlagefläche und dem Verriegelungselement klemmend gehalten ist.

Gemäß einer nochmals weiteren vorteilhaften nicht-erfindungsgemäßen Ausführungsvariante kann vorgesehen sein, dass die Befestigungseinrichtung in ihrem ersten Verriegelungsabschnitt einen Klemmkörper aufweist, der in seinem seitlichen Querschnitt der Verriegelungsposition an dem dem zweiten Bauteil zugewandten Endabschnitt die größte Länge aufweist und sich entlang der Mittellängsachse in Richtung des ersten Befestigungsabschnittes im Querschnitt verjüngt.

Gemäß einer nochmals weiteren vorteilhaften nicht-erfindungsgemäßen Ausführungsvariante kann vorgesehen sein, dass der Klemmkörper im ersten Verriegelungsabschnitt im Bereich seines freien Endabschnittes an zumindest zwei sich gegenüberliegenden Seiten jeweils gerade Anlagenflächen aufweist.

Gemäß einer nochmals weiteren vorteilhaften Ausführungsvariante kann vorgesehen sein, dass das erste Bauteil zumindest in seinem Profilierungsabschnitt einen mittleren sowie zwei seitliche Schenkelabschnitt aufweist, die im Querschnitt im Wesentlichen C-förmig ausgebildet sind und die Ausnehmung ausbilden.

Gemäß einer nochmals weiteren vorteilhaften Ausführungsvariante kann vorgesehen sein, dass sich der Klemmkörper in der Verriegelungsposition zumindest mit den geraden Anlagenflächen des freien Endabschnittes klemmend gegen die entsprechenden Innenseiten der seitlichen Schenkelabschnitt des Profilierungsabschnittes einspreitzt, so dass der Klemmkörper in der Ausnehmung einen Klemmsitz ausbildet.

Gemäß einer nochmals weiteren vorteilhaften Ausführungsvariante kann vorgesehen sein, dass der Klemmkörper im seitlichen Querschnitt der Freigabeposition eine Breite aufweist, die derart an den Querschnitt des Profilierungsabschnittes angepasst ist, dass der Klemmkörper in seiner Freigabeposition in die durch den Profilierungsabschnitt ausgebildete Ausnehmung einführbar ist.

Gemäß einer nochmals weiteren vorteilhaften Ausführungsvariante kann vorgesehen sein, dass der zweite Befestigungsabschnitt den freiendseitigen zweiten Verriegelungsabschnitt mit zumindest einen sich radial von der Mittellängsachse nach außen erstreckenden Verriegelungselement aufweist.

Gemäß einer nochmals weiteren vorteilhaften Ausführungsvariante kann vorgesehen sein, dass der zweite Befestigungsabschnitt einen sich an den freiendseitigen zweiten Verriegelungsabschnitt entlang der Mittellängsachse daran anschließenden zweiten Anlageabschnitt aufweist, der eine sich senkrecht zur Mittellängsachse erstreckende Aufnahmenut ausbildet.

Gemäß einer nochmals weiteren vorteilhaften Ausführungsvariante kann vorgesehen sein, dass die Aufnahmenut zumindest teilweise umlaufend, vorzugsweise vollumlaufend, um die Mittellängsachse ausgebildet ist und an dem dem zweiten Bauteil zugewandten Flächenabschnitt eine Anlagefläche ausbildet.

Gemäß einer nochmals weiteren vorteilhaften Ausführungsvariante kann vorgesehen sein, dass in einer Verriegelungsposition das wenigstens eine Verriegelungselement durch die Vorlochung hindurchgeführt ist und die Befestigungseinrichtung relativ zum zweiten Bauteil um vorzugsweise 90° Grad von einer Freigabeposition in die Verriegelungsposition verdreht ist, und zwar derart, dass das wenigstens eine Verriegelungselement die Vorlochung in der Verriegelungsposition hintergreift und sich an dem flachen Abschnitt auf der dem ersten Befestigungsabschnitt abgewandten Seite zumindest teilumfänglich um die Vorlochung herum an dem flachen Abschnitt abstützt.

Gemäß einer nochmals weiteren vorteilhaften Ausführungsvariante kann vorgesehen sein, dass das wenigstens eine Verriegelungselement durch die Drehung des zweiten Verriegelungsabschnitts zur klemmenden sowie kontaktschlüssigen Anlage an dem flachen Abschnitt des zweiten Bauteils auf der dem ersten Befestigungsabschnitt abgewandten Seite gelangt, derart, dass das zweite Bauteil in dem flachen Abschnitt auf der dem ersten Befestigungsabschnitt zugewandten Seite gegen die Anlagenfläche der Aufnahmenut gedrückt ist und der flache Abschnitt zwischen der Anlagefläche und dem Verriegelungselement klemmend gehalten ist.

Erfindungsgemäß ist vorgesehen, dass die Befestigungseinrichtung in ihrem zweiten Verriegelungsabschnitt einen Klemmkörper aufweist, der in seinem seitlichen Querschnitt der Verriegelungsposition an dem dem zweiten Bauteil zugewandten Endabschnitt die größte Länge aufweist und sich entlang der Mittellängsachse in Richtung des ersten Befestigungsabschnittes im Querschnitt verjüngt.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Offenbarung, unabhängig von ihrer Zusammenfassung in den Ansprüchen oder deren Rückbeziehung. Auch wird der Inhalt der Ansprüche zu einem Bestandteil der Beschreibung gemacht. Die Erfindung wird im Folgenden anhand der Figuren an Ausführungsbeispielen näher erläutert. Es zeigen:
- Fig. 1: eine schematische Seitenansicht einer beispielhaften Transportvorrichtung zum Transportieren von Stückgütern
- Fig. 2: eine schematische Schnittdarstellung entlang der Schnittlinie A aus Figur 1
- Fig.3: in schematischer Seitenansicht eine teilweise dargestellte beispielhafte Transportvorrichtung mit Anbaukomponente
- Fig. 4: eine schematische Seitenansicht einer beispielhaften Ausführungsvariante einer erfindungsgemäßen Anordnung in einer Verriegelungsposition der Befestigungseinrichtung,
- Fig. 5a: eine schematische Explosionsansicht der Ausführungsvariante der erfindungsgemäßen Anordnung gemäß Figur 3 in einer Freigabeposition der Befestigungseinrichtung,
- Fig. 5b: eine schematische Draufsicht auf die Vorlochung oder Öffnung eines ansonsten nur abschnittsweise dargestellten ersten oder zweiten Bauteils,
- Fig. 6a und 6b: in perspektivischer bzw. seitlicher schematischer Schnittdarstellung eine Ausführungsvariante einer alleingestellten Befestigungseinrichtung,
- Fig. 7a und 7b: jeweils in schematischer Seitenansicht verschiedene Ausführungsvarianten einer alleingestellten Befestigungseinrichtung.
- Fig. 8: in schematischer Seitenansicht eine weitere Ausführungsvariante einer nicht- erfindungsgemäßen Anordnung.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind. Dabei gelten im Zusammenhang des ersten Befestigungsabschnittes BA1 beschriebene vorteilhafte Ausführungsvarianten auf Grund des möglichen spiegelsymmetrischen Aufbaus der Befestigungseinrichtung 2 auch für den zweiten Befestigungsabschnitt BA2 der Befestigungseinrichtung 2 und vice versa.

Die in den Figuren allgemein mit 100 bezeichnete, beispielhafte Transportvorrichtung dient insbesondere zum Transportieren von Stückgut 102 in wenigstens einer Transportrichtung A zwischen jeweils nicht nähergehend dargestellten Behälterbehandlungsmaschinen und/oder Überschubstationen und/oder Transferstationen und/oder Überleitstationen für die Verpackungs- und/oder Getränkeindustrie. Besonders vorteilhaft weist die Transportvorrichtung 100 dabei eine Leistung von mehr als 10000, bevorzugt von mehr als 50000 beförderten Stückgütern 102, beispielsweise Behältern, pro Stunde auf.

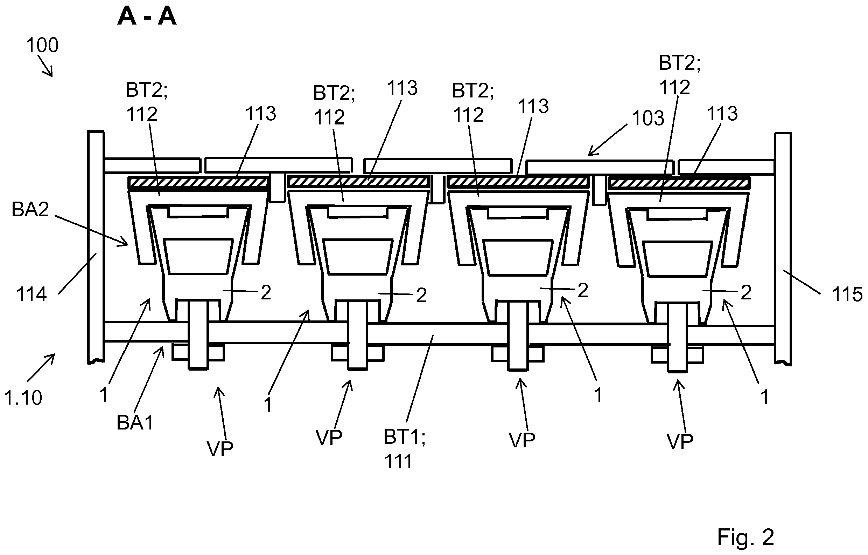

Insbesondere umfasst die Transportvorrichtung 100 hierfür wenigstens ein, eine geschlossene Schlaufe ausbildendes und in Transportrichtung A endlos umlaufend angetriebenes Transportelement 103, das beispielsweise als Transportriemen, Transportkette, Scharnierbandkette, ausgebildet sein kann. Das Transportelement 103 bildet mit seiner oberen, sich gegen wenigstens eine, in der Figur 2 näher dargestellte, Gleitführung 113 abstützende Länge eine horizontale oder im Wesentlichen horizontale Transportebene oder -fläche TE aus, auf der das Stückgut 102 mit seinem Stückgutboden oder seinem Standboden aufsteht. Dabei können auch mehrere, beispielsweise zwei, drei, vier oder mehr Transportelemente 103 vorgesehen sein, die mehrzügig, d.h. quer oder senkrecht zur Transportrichtung A einander benachbart angeordnet sind, sodass die mehreren Transportelemente 103 zumindest mit einem Teil ihrer jeweils oberen Länge ihrer entsprechenden Schlaufe die gemeinsame Transportebene TE ausbilden, auf der das Stückgut 102 mit seiner Bodenfläche zumindest teilweise aufstehen kann.

An dem bezogen auf die Transportrichtung A vorderen Ende 1.11 sowie bezogen auf die Transportrichtung A rückwärtigen Ende 1.12 ist das wenigstens eine Transportelement 103 jeweils über Umlenkeinrichtungen 141, 142 geführt, wobei das wenigstens eine Transportelement 103 insbesondere an seinem vorderen Ende 1.11 über eine vordere Umlenkeinrichtung 141 und an seinem rückwärtigen Ende 1.12 über eine rückwärtige Umlenkeinrichtung 142 geführt ist. Zwischen der vorderen und der rückwärtigen Umlenkeinrichtung 141, 142 ist mittels des wenigstens einen Transportelementes 103 eine Transportstrecke TS für das Stückgut 102 ausbildet. Die Transportstrecke TS, auf der das Stückgut 102 befördert werden kann, ist also insbesondere von der rückwärtigen Umlenkeinrichtung 142 in Transportrichtung A bis zur vorderen Umlenkeinrichtung 141 ausgebildet.

Dabei kann auch vorgesehen sein, dass die vordere und/oder die hintere Umlenkeinrichtung 141, 142 motorisch antreibbar ausgebildet ist. Beispielsweise kann die vordere und/oder hintere Umlenkeinrichtung 141, 142 als Elektromotor, vorzugsweise als getriebeloser Elektromotor, beispielsweise in Form eines direkt angetriebenen Elektromotors, bevorzugt in Form eines Schrittmotors, eines Servomotors oder eines Torquemotors, ausgebildet sein.

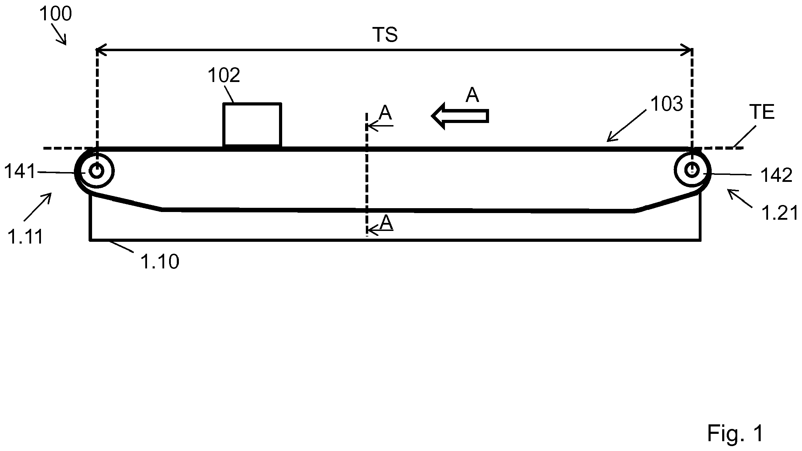

Zudem weist die Transportvorrichtung 100, wie in der Figur 1 nur schematisch angedeutet, ein Gerüst 110 auf, das einen Maschinenrahmen ausbildet und an dem sämtliche Komponenten der Transportvorrichtung 100 angeordnet bzw. aufgenommen sind und mittels dem die Transportvorrichtung 100 über nicht nähergehend dargestellte Stützelemente bzw. Beine auf einer Bodeneben aufsteht. Wie hierbei insbesondere aus der Figur 2 mehr im Detail ersichtlich, weist das Gerüst 110 wenigstens einen sich über die gesamte Transportelementbreite, also quer zur Transportrichtung A, erstreckenden Grundkörper 111 auf, an dem über zumindest eine erfindungsgemäße Befestigungseinrichtung 2 ein Profilelement 112 lösbar, jedoch fest, verbunden ist. Die Befestigungseinrichtung 2 steht also mit ihrem ersten Befestigungsabschnitt BA1 mit einem ersten Bauteil BT1, nämlich hier beispielhaft mit dem Grundkörper 111, und mit ihrem zweiten Befestigungsabschnitt BA2 mit einem zweiten Bauteil BT2, nämlich hier beispielhaft mit dem Profilelement 112, lösbar in Wirkeingriff, so dass das erste und zweite Bauteil BT1 und BT2 mittels der Befestigungseinrichtung 2 lösbar verbindbar sind.

Insbesondere sind in dem Ausführungsbeispiel der Figur 2 mehrere, insbesondere vier Befestigungseinrichtungen 2 gezeigt, die mit ihrem jeweils ersten Befestigungsabschnitt BA1 mit einem gemeinsamen Grundkörper 111 und mit ihrem zweiten Befestigungsabschnitt BA2 mit jeweils einem Profilelement 112 lösbar verbunden sind. Auf der Oberseite der jeweiligen Profilelemente 112 kann eine Gleitleiste 113 vorgesehen sein, die fest mit dem jeweiligen Profilelement 112 verbunden, insbesondere verschraubt, verlötet, verklebt oder verschweißt, sein kann. Auf den Gleitleisten 113 wiederum liegt das oder die Transportelemente 103 auf, das über die Oberseite der Gleitleisten 113 gleitend geführt wird. Zudem sind jeweils seitlich des Grundkörpers 111 ein rechtes und linkes Gerüstblech 114, 115 vorgesehen. Vorzugsweise erstrecken sich die Profilelemente 112 und/oder die Gleitleisten 113 und/oder die Gerüstbleche 114, 115 über die gesamte Länge der Transportstrecke TS und können dabei einteilig oder vorzugsweise jeweils mehrteilig ausgebildet sein.

Auch können mit dem Gerüst 110 mittels der erfindungsgemäßen Befestigungseinrichtung 2 direkt oder indirekt noch weitere Bauteile oder Komponenten verbunden, insbesondere lösbar befestigt, sein. Dabei kann es sich bei den Bauteilen oder Komponenten beispielsweise um elektrische Bauteile, wie Reparaturschalter und/oder Sensoren, handeln. Auch kann es sich bei den Bauteilen oder Komponenten um mechanische Bauteile, wie Spiegel für Lichtschranken und/oder Halter für Geländer zum Führen von Behältern und/oder Haltebleche für das Befestigen weiterer Bauteile und/oder Halteleisten für das Befestigen weiterer Bauteile und/oder Schaltkästen für die Aufnahme elektrischer Schaltungen, handeln.

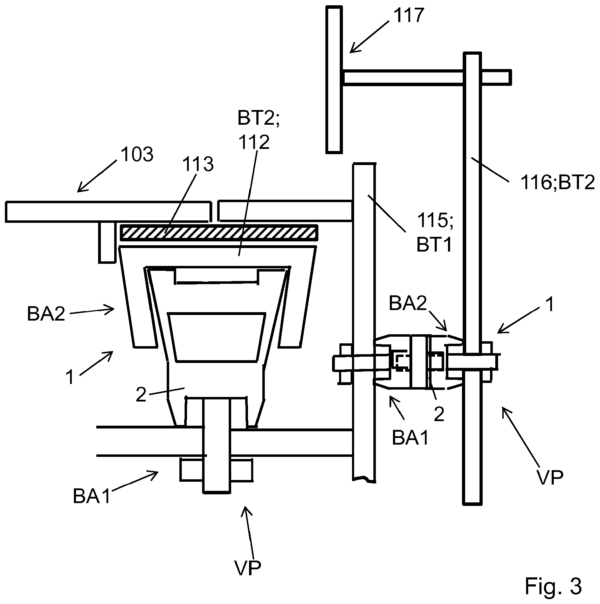

Beispielhaft ist in diesem Zusammenhang in der Figur 3 eine Ausführungsvariante gezeigt, bei der an dem Gerüst 110, insbesondere an dem rechten Gerüstblech 115, mittels der Befestigungseinrichtung 2 ein Halteelement 116, insbesondere ein Haltblech oder eine Halteleiste, mit einem daran befestigten Führungsgeländer 117 für das Stückgut 102 vorgesehen ist. Die Befestigungseinrichtung 2 steht also mit ihrem ersten Befestigungsabschnitt BA1 mit einem ersten Bauteil BT1, nämlich hier beispielhaft mit dem rechten Gerüstblech 115, und mit ihrem zweiten Befestigungsabschnitt BA2 mit einem zweiten Bauteil BT2, nämlich hier beispielhaft mit dem Halteelement 116, lösbar in Wirkeingriff, so dass das erste und zweite Bauteil BT1 und BT2 mittels der Befestigungseinrichtung 2 lösbar verbindbar sind.

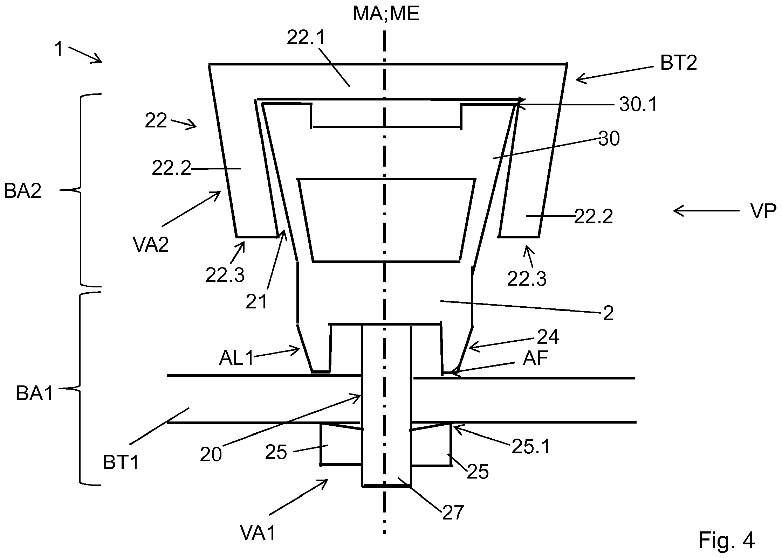

Die Figur 4 zeigt dabei eine schematische Seitenansicht einer beispielhaften Ausführungsvariante einer erfindungsgemäßen Anordnung 1 in einer Verriegelungsposition VP der Befestigungseinrichtung 2, in der das erste Bauteil BT1 lösbar mit dem zweiten Bauteil BT2 mittels der Befestigungseinrichtung 2 verbunden ist. In der in Figur 4 dargestellten Seitenansicht spannt die Anordnung 1 eine Mittelebene ME durch die Mittellängsachse MA auf, die zur Zeichenebene, also der dargestellten Seitenansicht, senkrecht orientiert ist.

Mehr im Detail ist die Anordnung 1 zur lösbaren Verbindung der wenigstens zwei Bauteile BT1, BT2 mittels einer Befestigungseinrichtung 2 ausgebildet und weist hierfür einen ersten und einen zweiten, sich jeweils entlang einer Mittellängsachse MA der Befestigungseinrichtung 2 erstreckenden und einander gegenüberliegenden Befestigungsabschnitt BA1, BA2 auf. Insbesondere steht dabei der erste Befestigungsabschnitt BA1 mit dem ersten Bauteil BT1 und der zweite Befestigungsabschnitt BA2 mit dem zweiten Bauteil BT2 in lösbarem Wirkeingriff, so dass das erste Bauteil BT1 über den ersten Befestigungsabschnitt BA1 und das zweite Bauteil BT2 über den zweiten Befestigungsabschnittes BA2 miteinander verbindbar sind.

Ferner weist der erste Befestigungsabschnitt BA1 einen freiendseitigen ersten Verriegelungsabschnitt VA1 und/oder der zweite Befestigungsabschnitt BA2 einen zweiten Verriegelungsabschnitt VA2 auf mittels dem das erste und/oder zweite Bauteil BT1, BT2 in einer jeweiligen Verriegelungsposition VP fest an der Befestigungseinrichtung 2 gehalten und in einer jeweiligen Freigabeposition FP von der Befestigungseinrichtung 2 gelöst, also freigegeben, werden kann.

Gemäß der Ausführungsvariante der Figur 4 weist das erste Bauteil BT1 zur lösbar klemmenden Befestigung zumindest in einem zumindest abschnittsweise flachen Abschnitt 23 eine von der Kreisform abweichende Vorlochung oder Öffnung 20 auf, dessen Querschnitt an den Längsschnitt desersten Verriegelungsabschnitts VA1 angepasst ist, und zwar derart, dass der erste Verriegelungsabschnitt VA1 durch die Vorlochung 20 hindurchführbar ist und die Befestigungseinrichtung 2 durch Verdrehung um die Mittellängsachse MA mit dem ersten Befestigungsabschnitt BA1 an dem ersten Bauteil BT1 klemmend und/oder formschlüssig befestigbar ist.

Ferner kann der erste Befestigungsabschnitt BA1 neben dem freiendseitigen ersten Verriegelungsabschnitt VA1 einen sich entlang der Mittellängsachse MA in Richtung des zweiten Befestigungsabschnittes BA2 daran anschließenden ersten Anlageabschnitt AL1 aufweisen, der eine sich vorzugsweise senkrecht zur Mittellängsachse MA erstreckende Aufnahmenut 24 ausbildet. Insbesondere kann der erste Anlagenabschnitt AL1 unmittelbar benachbart an dem zweiten Befestigungsabschnitt BA2 vorgesehen, insbesondere an diesem angeordnet sein. Die Aufnahmenut 24 ist dabei zumindest teilweise umlaufend um die Mittellängsachse MA, vorzugsweise vollumlaufend um die Mittellängsachse MA vorgesehen, und bildet an dem dem ersten Bauteil BT1 zugewandten Flächenabschnitt eine Anlagefläche AF für das erste Bauteil BT1 in der Verriegelungsposition VP aus. Insbesondere ist die Aufnahmenut 24 in ihrer Dimensionierung an die Vorlochung 20 angepasst, derart, dass die Aufnahmenut 24 in der Verrieglungsposition VP nicht durch die Vorlochung 20 hindurchgeführt werden kann, sondern sich an dem flachen Abschnitt 23 auf der dem zweiten Befestigungsabschnitt BA2 zugewandten Seite zumindest teilumfänglich um die Vorlochung 20 herum an dem flachen Abschnitt 23 abstützt, insbesondere kontaktschlüssig zur Anlage gelangt.

Überdies weist der erste Befestigungsabschnitt BA1 im ersten Verriegelungsabschnitt VA1 zumindest ein Verriegelungselement 25 auf, das an einem die Mittellängsachse MA koaxial umschließenden Abschnitt 27 vorgesehen ist und sich von der Mittellängsachse MA ausgehend radial nach außen erstreckt und als Verrieglungsfinger ausgebildet sein kann. Der Querschnitt des zumindest einen Verriegelungselementes 25, also dessen radiale Erstreckung, ist an den Querschnitt der Vorlochung 20 angepasst. Vorteilhaft sind dabei mehrere, insbesondere zwei Verriegelungselemente 25 vorgesehen, die an vorzugsweise gegenüberliegenden Seiten des Abschnittes 27 vorgesehen sind und sich von der Mittellängsachse MA ausgehend jeweils radial nach außen erstrecken und vorzugsweise jeweils als Verriegelungsfinger ausgebildet sind. Die Längserstreckung des Abschnittes 27 kann dabei an die Dicke des zu verriegelnden ersten Bauteils BT1 anpasst sein.

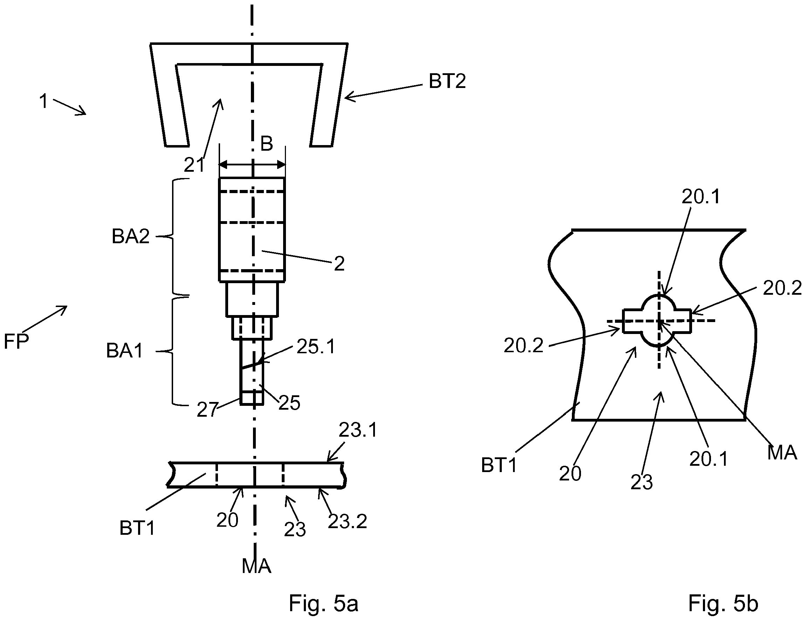

Dabei weist das wenigstens eine Verriegelungselement 25 an seiner dem zweiten Befestigungsabschnitt BA2 zugewandten Oberseite eine schräg, insbesondere spitzwinklig zur Mittellängsachse MA, orientiere Anlagefläche 25.1 auf, wie insbesondere aus der Figur 5a entnehmbar ist.

In der Verriegelungsposition VP ist das wenigstens eine Verriegelungselement 25 durch die Vorlochung 20 hindurchgeführt und die Befestigungseinrichtung 2 relativ zum ersten Bauteil BT1 um vorzugsweise 40° Grad von der Freigabeposition FP in die Verriegelungsposition VP verdreht, und zwar derart, dass das wenigstens eine Verriegelungselement 25 die Vorlochung 20 in der Verriegelungsposition VP hintergreift und sich an dem flachen Abschnitt 23 auf der dem zweiten Befestigungsabschnitt BA2 abgewandten Seite zumindest teilumfänglich um die Vorlochung 20 herum an dem flachen Abschnitt 23 abstützt, insbesondere kontaktschlüssig zur Anlage gelangt. Mehr im Detail kommt die schräge Anlagefläche 25.1 des wenigstens einen Verriegelungselementes 25 durch die Drehung des ersten Verriegelungsabschnitts VA1 zur klemmenden sowie kontaktschlüssigen Anlage an dem flachen Abschnitt 23 des ersten Bauteils BT1 auf der dem zweiten Befestigungsabschnitt BA2 abgewandten Seite, derart, dass das erste Bauteil BT1 in dem flachen Abschnitt 23 auf der dem zweiten Befestigungsabschnitt BA2 zugewandten Seite gegen die Anlagenfläche AF der Aufnahmenut 24 gedrückt wird und der flache Abschnitt 23 zwischen der Anlagefläche AF und der schrägen Anlagefläche 25.1 klemmend gehalten wird.

Wie insbesondere aus dem in Figur 5b in schematischer Draufsicht teilweise dargestellten flachen Flächenabschnitt 23 eines ersten Bauteils BT1 ersichtlich, weist die darin vorgesehene Vorlochung 20 eine von der Kreisform abweichende Geometrie im Querschnitt der Draufsicht auf. Insbesondere kann die Vorlochung 20 spielsymmetrisch ausgebildet sein und zwei identische Kreisbogenabschnitte 20.1 sowie zwei identische Rechteckabschnitte 20.2 aufweisen, die derart an den Längsschnitt des ersten Verriegelungsabschnitt VA1 geometrisch angepasst sind, dass der erste Verriegelungsabschnitt VA1, insbesondere das zumindest einen Verriegelungselement 25, durch die Rechtseckabschnitte 20.2 hindurchführbar ist und durch die 40 Grad Drehung in der Verriegelungsposition VP mittels der Kreisbogenabschnitte 20.1 vor einem Herausziehen aus der Vorlochung 20 gesperrt sind. Dabei kann die Vorlochung 20 in dem flachen Flächenabschnitt 23 beispielsweise durch Lasern, Stanzen oder Bohren erzeugt werden.

Der flache Flächenabschnitt 23 des ersten Bauteils BT1 weist eine plan, also eben, ausgebildete und dem zweiten Befestigungsabschnitt BA2 zugewandte Oberseite 23.1 sowie eine plan ausgebildete und dem zweiten Befestigungsabschnitt BA2 abgewandte Unterseite 23.2 auf. Insbesondere spannen die Oberseite 23.1 und Unterseite 23.2 im flachen Flächenabschnitt 23 parallel oder im Wesentlichen parallel zueinander verlaufende Ebenen auf. In anderen Worten weist der flache Flächenabschnitt 23 also eine konstante oder näherungsweise konstante Flächenstärke, insbesondere Flächendicke, auf.

Dabei weist gemäß der Ausführungsvariante der Figur 4 das zweite Bauteil BT2 zumindest einen eine Ausnehmung 21 ausbildenden Profilierungsabschnitt 22 auf, dessen Querschnitt an den Längsschnitt des zweiten Verriegelungsabschnitt VA2 angepasst ist, und zwar derart, dass zur lösbar klemmenden Befestigung des zweiten Befestigungsabschnittes BA2 am zweiten Bauteil BT2 durch Verdrehung des zweiten Verriegelungsabschnittes VA2 um die Mittelängsachse MA der zweite Verriegelungsabschnitt VA2 zumindest abschnittsweise formschlüssig und/oder kraftschlüssig in der Ausnehmung 21 aufnehmbar ist.

Dabei kann es sich bei dem zweiten Bauteil BT2 um ein Profilelement handeln, das zumindest einen Profilierungsabschnitt 22 aufweist, der in seinem Querschnitt beispielsweise im Wesentlichen C-förmig ausgebildet ist. Das als Profilelement ausgebildete zweite Bauteil BT2 weist dabei drei Schenkelabschnitte, nämlich einen mittleren Schenkelabschnitt 22.1, sowie zwei seitliche Schenkelabschnitte 22.2, auf. Derartige Profilelemente sind dem Fachmann auf dem Gebiet der Transportvorrichtungen in der Getränkeindustrie als C-Profilelemente bekannt. Dabei verlaufen die jeweiligen freien Enden 22.3 der beiden seitlichen Schenkelabschnitte 22.2 spitzwinklig zur Mittelebene ME und bilden die Ausnehmung 21 aus, in der der zweite Verriegelungsabschnitt VA2 klemmend aufnehmbar ist.

Die Befestigungseinrichtung 2 weist in ihrem zweiten Verriegelungsabschnitt VA2 einen Klemmkörper 30 auf, der in seiner Draufsicht, also senkrecht zur Mittelebene ME, im Wesentlichen oval ausgebildet ist, und sich in dabei in Richtung des ersten Befestigungsabschnittes BA1 verjüngt, d.h. einen im Vergleich dazu kleineren ovalen Durchmesser aufweist, so dass der Klemmkörper 30 an seinem freien, dem zweiten Bauteil BT2 zugewandten Endabschnitt 30.1, die größte Länge L im seitlichen Querschnitt seiner Verriegelungsposition VP aufweist. Insbesondere weist der im Wesentlichen in seiner Draufsicht oval ausgebildete Klemmkörper 30 an zumindest zwei sich vorzugsweise gegenüberliegenden Seiten im Bereich des freien Endabschnittes 30.1 jeweils gerade Anlagenflächen 30.2, 30.3 auf, mit denen sich der Klemmkörper 30 in seiner Verriegelungsposition VP klemmend gegen die entsprechenden Innenseiten der beiden seitlichen Schenkelabschnitte 22.2 einspreitzt und so seinen Klemmsitz ausbildet. Dabei sind die beiden seitlichen Schenklabschnitte 22.2 derart elastisch verformbar ausgebildet, dass sie bei einem Eindrehen der Anlagenflächen 30.2, 30.3 des Klemmkörpers 30 von der Freigabeposition FP in die Verriegelungsposition VP nach außen, also von der Mittelebene ME weggerichtet, ausgelenkt werden - also elastisch nachgeben.

Zwischen der Freigabeposition FP und der Verriegelungsposition VP wird der zweite Verriegelungsabschnitt VA2 der Befestigungseinrichtung 2 um vorzugsweise 40 Grad relativ zu dem Profilierungsabschnitt 22 verdreht. Die Figur 4 zeigt dabei insbesondere die Verriegelungsposition VP, während die Figur 5a die Freigabeposition FP zeigt. Weiterhin vorteilhaft kann die Befestigungseinrichtung 2 einteilig, insbesondere einstückig, ausgebildet sein, so dass sich bei einer Verdrehung des zweiten Befestigungsabschnitts BA2 der Befestigungseinrichtung 2 auch der erste Befestigungsabschnitt BA1 mit verdreht, also beispielsweise von der Freigabeposition FP in die Verriegelungsposition VP gedreht wird. Erster und zweiter Befestigungsabschnitt BA1, BA2 sind also kraftschlüssig miteinander verbunden.

Dabei weist der Klemmkörper 30 im seitlichen Querschnitt der Freigabeposition FP eine Breite B auf, die derart an den Querschnitt des Profilierungsabschnittes 22 angepasst ist, dass der Klemmkörper 30 in seiner Freigabeposition FP in die durch den Profilierungsabschnitt 22 ausgebildete Ausnehmung 21 einführbar ist.

Überdies weist der Klemmkörper 30 im Bereich der sich gegenüberliegenden Anlageflächen 30.2, 30.3 eine derartige Länge L, also Abstand der Anlageflächen 30.2, 30.3 auf, dass sich der Klemmkörper 30 in seiner Verriegelungsposition VP klemmend gegen die entsprechenden Innenseiten der beiden seitlichen Schenkelabschnitte 22.2 des zweiten Bauteils BT2 einspreitzt und so einen Klemmsitz erzeugbar ist. Weiterhin ist der Klemmkörper 30 derart ausgebildet, dass dieser durch eine Verdrehung von der Freigabeposition FP in die Verriegelungsposition VP gegen die Unterseite des mittleren Schenkelabschnittes 22.1 gedrückt wird und an der Unterseite des mittleren Schenkelabschnittes 22.1 bei Erreichen der Verrieglungsposition VP zur Anlage gelangt, so dass eine definierte Lage der Befestigungseinrichtung 2 relativ zu dem zweiten Bauteil BT2 herstellbar ist.

Insbesondere können die Länge L und Breite B des Klemmkörpers 30 an den Profilierungsabschnitt 22, insbesondere an die Dimensionierung des mittleren sowie der seitlichen Schenkelabschnitte 22.2 angepasst sein.

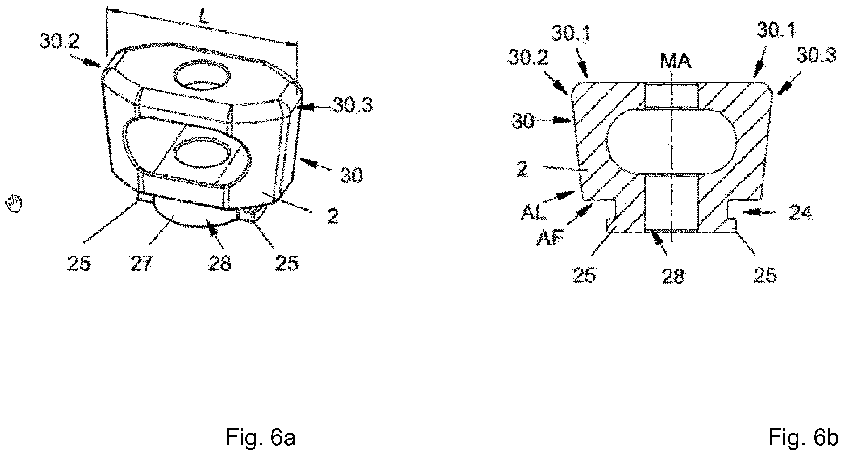

Wie insbesondere aus der Figur 6a oder 6b ersichtlich ist, weist die Befestigungseinrichtung 2 eine den ersten und zweiten Befestigungsabschnitt BA1, BA2 durchdringende Durchführung in Form einer Öffnung 28 auf, die im Bereich des Abschnittes 27 zumindest abschnittsweise einen Innensechskant ausweisen kann, der eine Angriffsfläche für ein Werkzeug, beispielweise einen Inbusschlüssel, ausgebildet, so dass die Drehbewegung zwischen der Freigabeposition FP und der Verriegelungsposition VP über das Werkzeug auf die Befestigungseinrichtung 2 einleitbar ist.

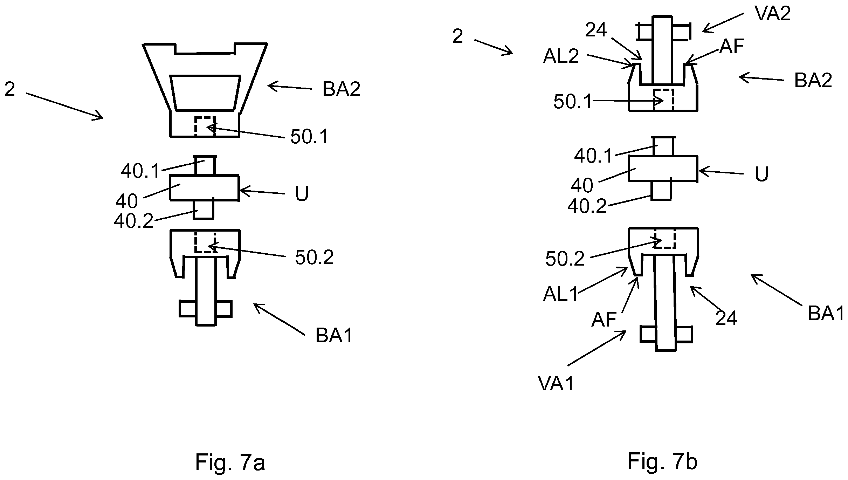

Die Figuren 7a bis 7b zeigen jeweils in vereinfachter schematischer Seitenansicht weitere Ausführungsvarianten der Befestigungseinrichtung 2. Unterschiedlich zu der Ausführungsvariante der Figuren 4 bis 6, ist die jeweilige Befestigungseinrichtung 2 gemäß der Ausführungsvarianten der Figuren 7a und 7b mehrteilig ausgebildet. Insbesondere ist dabei der jeweilige erste Befestigungsabschnitt BA1 mittels eines Zwischenstücks 40 mit dem entsprechenden zweiten Befestigungsabschnitt BA2 fest verbunden. Hierfür kann das als Abstandstandhalter ausgebildete Zwischenstück 40 aus einem Vollmaterial herstellt sein und beispielsweise zwei beispielsweise nase-oder rohrförmige Anschlussabschnitte 40.1, 40.2 aufweisen, die in Wirkeingriff mit dem ersten bzw. zweiten Befestigungsabschnitt BA1, BA2 stehen. Beispielsweise kann der Anschlussanschnitt 40.1, 40.2 mit einem korrespondierenden Aufnahmeabschnitt 50.1, 50.2 des ersten bzw. zweiten Befestigungsabschnitts BA1, BA2 verschraubt, verklebt, verlötet oder verschweißt sein. Der jeweilige Anschlussabschnitt 50.1, 50.2 kann dabei in seiner geometrischen Ausgestaltung an den entsprechenden Anschlussabschnitt 40.1, 40.2 angepasst, beispielsweise als Sackloch ausgebildet sein.

Dabei kann die Umfangsfläche U des Zwischenstücks 40 als Angriffsfläche für ein Werkzeug, beispielweise einen Gabelschlüssel oder Schraubenschlüssel, ausgebildet sein, so dass die Drehbewegung zwischen der Freigabeposition FP und der Verriegelungsposition VP über das Werkzeug auf die Befestigungseinrichtung 2 einleitbar ist. Beispielsweise kann die Umfangsfläche U n-eckig, insbesondere sechs-eckig, ausgebildet sein.

Figur 7b zeigt dabei eine Ausführungsvariante bei der der erste und zweite Befestigungsabschnitt BA1, BA2 identisch ausgebildet sind und zwar insbesondere wie der erste Befestigungsabschnitt BA1 der Ausführungsvariante der Figuren 4 und 5. Alternativ ist es im Rahmen der Erfindung auch möglich, dass der erste und zweite Befestigungsabschnitt BA1, BA2 identisch ausgebildet sind und zwar derart, wie der zweite Befestigungsabschnitt BA2 der Figuren 4 und 5.

In anderen Worten ist also erfindungsgemäß vorgesehen, dass das erste Bauteil BT1 zur lösbar klemmenden Befestigung zumindest in einem zumindest abschnittsweise flachen Abschnitt 23 eine von der Kreisform abweichende Vorlochung oder Öffnung 20 auf, dessen Querschnitt an den Längsschnitt des ersten Verriegelungsabschnitts VA1 angepasst ist, und zwar derart, dass der erste Verriegelungsabschnitt VA1 durch die Vorlochung 20 hindurchführbar ist und die Befestigungseinrichtung 2 durch Verdrehung um die Mittellängsachse MA mit dem ersten Befestigungsabschnitt BA1 an dem ersten Bauteil BT1 klemmend befestigbar ist. Nicht-erfindungsgemäß ist, dass das erste Bauteil BT1 zumindest einen eine Ausnehmung 21 ausbildenden Profilierungsabschnitt 22 auf, dessen Querschnitt an den Querschnitt des ersten Verriegelungsabschnitt VA1 angepasst ist, und zwar derart, dass zur lösbar klemmenden Befestigung des ersten Befestigungsabschnittes BA1 am ersten Bauteil BT1 durch Verdrehung des ersten Verriegelungsabschnittes VA1 um die Mittelängsachse MA der erste Verriegelungsabschnitt VA1 zumindest abschnittsweise formschlüssig in der Ausnehmung 21 aufnehmbar ist.

Auf Grund des symmetrischen Aufbaus kann auch vorgesehen, dass das zweite Bauteil BT2 zur lösbar klemmenden Befestigung zumindest in einem zumindest abschnittsweise flachen Abschnitt 23 eine von der Kreisform abweichende Vorlochung oder Öffnung 20 auf, dessen Querschnitt an den Längsschnitt des zweiten Verriegelungsabschnitts VA2 angepasst ist, und zwar derart, dass der zweite Verriegelungsabschnitt VA2 durch die Vorlochung 20 hindurchführbar ist und die Befestigungseinrichtung 2 durch Verdrehung um die Mittellängsachse MA mit dem zweiten Befestigungsabschnitt BA2 an dem zweiten Bauteil BT2 klemmend befestigbar ist, oder dass das zweite Bauteil BT2 zumindest einen eine Ausnehmung 21 ausbildenden Profilierungsabschnitt 22 auf, dessen Querschnitt an den Querschnitt des zweiten Verriegelungsabschnitt VA2 angepasst ist, und zwar derart, dass zur lösbar klemmenden Befestigung des zweiten Befestigungsabschnittes BA2 am zweiten Bauteil BT2 durch Verdrehung des zweiten Verriegelungsabschnittes VA2 um die Mittelängsachse MA der zweite Verriegelungsabschnitt VA2 zumindest abschnittsweise formschlüssig in der Ausnehmung 21 aufnehmbar ist.

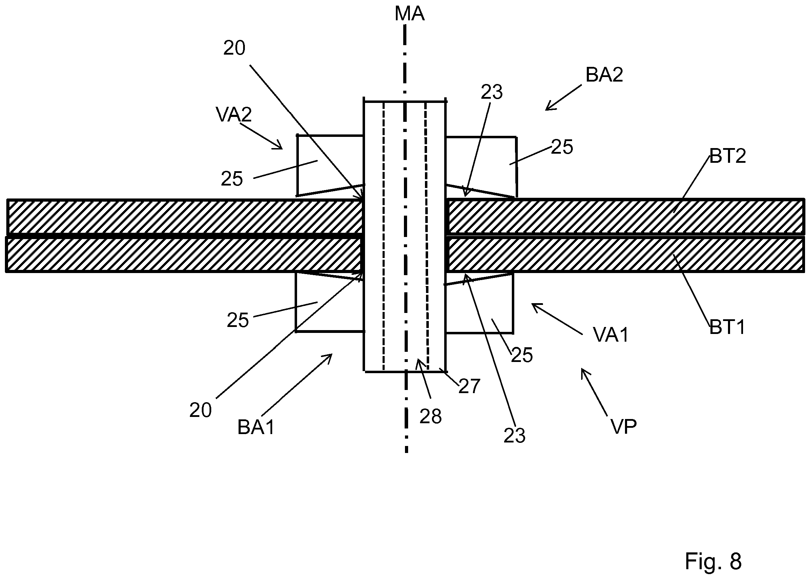

Figur 8 zeigt in einer schematischen Seitenansicht eine weitere Ausführungsvariante einer nicht-erfindungsgemäßen Anordnung 1', deren Befestigungseinrichtung 2 im Unterschied zu der Ausführungsvarianten der Figuren 4 bis 7 keinen ersten und zweiten Anlagenabschnitt AL1, AL2 und keine sich senkrecht zur Mittellängsachse MA erstreckende Aufnahmenut 24 kennt. Vielmehr wird in der Ausführungsvariante der Figur 8 die jeweilige Anlagefläche durch das entsprechende erste und zweite Bauteil BT1, BT2 selbst ausgebildet, das jeweils zumindest den abschnittsweise flachen Abschnitt 23 und eine von der Kreisform abweichende Vorlochung oder Öffnung 20 aufweist, gegen das sich der erste und zweite Verriegelungsabschnitt VA1, VA2 wechselseitig in der Verriegelungsposition VP abstützt. Hierfür weist sowohl der erste als auch der zweite Befestigungsabschnitt BA1, BA2 jeweils zumindest ein Verriegelungselement 25, wie es im Zusammenhang der Ausführungsvariante der Figuren 4 und 5 nähergehend erläutert wurde.

Weiterhin kann auch die Befestigungseinrichtung 2 gemäß der Figur 8 eine den ersten und zweiten Befestigungsabschnitt BA1, BA1 durchdringende Durchführung in Form einer Öffnung 28 aufweisen, die im Bereich des Abschnittes 27 zumindest abschnittsweise einen Innensechskant ausweisen kann, der eine Angriffsfläche für ein Werkzeug, beispielweise einen Inbusschlüssel, ausgebildet, so dass die Drehbewegung zwischen der Freigabeposition FP und der Verriegelungsposition VP über das Werkzeug auf die Befestigungseinrichtung 2 einleitbar ist.

Die Erfindung wurde voranstehend an Ausführungsbeispielen beschrieben. Es versteht sich, dass zahlreiche Änderungen sowie Abwandlungen möglich sind.

So ist zum Beispiel im Rahmen einer weiteren, überaus vorteilhaften Ausführungsform vorgesehen, dass der erste und der zweite Befestigungsabschnitt BA1, BA2 nicht, wie beispielsweise in den Figuren 7a und 7b dargestellt, durch ein Zwischenstück 40 mit einander verbunden sind. Anstatt dessen ist vorgesehen, dass der, die Anlagefläche AF aufweisende erste Befestigungsabschnitt BA1 prismatisch ausgebildet ist und dabei einen Durchbruch entlang seiner Längsachse aufweist. Beispielsweise ist dieser Durchbruch als Bohrung ausgebildet, deren Mittelachse deckungsgleich mit der Mittelachse des ersten Befestigungsabschnittes BA1 ist.

Weiterhin ist bei dieser weiteren Ausführungsform vorgesehen, dass der zweite Befestigungsabschnitt BA2 so ausgebildet ist, dass er sowohl den zweiten Verriegelungsabschnitt VA2 als auch zusätzlich den ersten Verriegelungsabschnitt VA1 beinhaltet. Zur Montage wird nun der am zweiten Befestigungsabschnitt BA2 vorhandene Verriegelungsabschnitt VA1 durch den im ersten Befestigungsabschnitt BA1 vorhandenen Durchbruch gesteckt und anschließend durch die im ersten Bauteil BT1 vorhandene Vorlochung 20 gesteckt und dort auf die erfindungsgemäße Art und Weise fixiert. Dabei werden die beiden Befestigungsabschnitte BA1, BA2 ebenfalls gegeneinander bzw. miteinander fixiert, so dass das Zwischenstück 40 entfällt.

Es versteht sich von selbst, dass die Anordnung auch so ausgebildet werden kann, dass der erste Befestigungsabschnitt BA1 den zweiten Befestigungsabschnitt BA2 durchdringt und diesen dann fixiert.

### Bezugszeichenliste

- 100: Transportvorrichtung
- 102: Stückgut
- 103: Transportelement
- 110: Gerüst
- 111: Grundkörper
- 112: Profilelement
- 113: Gleitleiste
- 114: Gerüstblech
- 115: Gerüstblech
- 116: Halteelement
- 117: Führungsgeländer
- 141: vordere Umlenkreinrichtung
- 142: rückwärtige Umlenkeinrichtung

- 1: Anordnung
- 1.11: vorderes Ende
- 1.12: rückwärtiges Ende
- 2: Befestigungseinrichtung
- 20: Vorlochung
- 20.1: Kreisbogenabschnitt
- 20.2: Rechteckabschnitt
- 21: Ausnehmung
- 22: Profilierungsabschnitt
- 22.1: mittlerer Schenkelabschnitt
- 22.2: seitlicher Schenkelabschnitt
- 22.3: freies Ende
- 23: flacher Abschnitt
- 23.1: Oberseite
- 23.2: Unterseite
- 24: Aufnahmenut
- 25: Verriegelungselement
- 25.1: schräge Anlagefläche
- 27: Abschnitt
- 28: Öffnung

- 30: Klemmkörper
- 30.1: Endabschnitt
- 30.2, 30.3: gerade Anlagenfläche

- 40: Zwischenstück
- 40.1: Anschlussabschnitt
- 40.2: Anschlussabschnitt
- 50.1: Aufnahmeabschnitt
- 50.2: Aufnahmeabschnitt

- AL1: erster Anlagenabschnitt
- AL2: zweiter Anlagenabschnitt
- AF: Anlagefläche
- BA1: erster Befestigungsabschnitt
- BA2: zweiter Befestigungsabschnitt
- BT1: erstes Bauteil
- BT2: zweites Bauteil
- VA1: erster Verriegelungsabschnitt
- VA2: zweiter Verriegelungsabschnitt

- A: Transportrichtung
- TS: Transportstrecke
- VP: Verriegelungsposition
- FP: Freigabeposition
- ME: Mittelebene
- MA: Mittellängsasche
- L: Länge
- B: Breite
- U: Umfangsfläche

## Patentansprüche

1. Anordnung zur lösbaren Verbindung von wenigstens zwei Bauteilen (BT1, BT2) mittels einer Befestigungseinrichtung (2), wobei die Befestigungseinrichtung (2) einen ersten und einen zweiten, sich jeweils entlang einer Mittellängsachse (MA) der Befestigungseinrichtung (2) erstreckenden und einander gegenüberliegenden Befestigungsabschnitt (BA1, BA2) aufweist, wobei das erste Bauteil (BT1) der Anordnung über den ersten Befestigungsabschnitt (BA1) und das zweite Bauteil (BT2) der Anordnung über den zweiten Befestigungsabschnittes (BA2) miteinander verbindbar sind, wobei der erste Befestigungsabschnitt (BA1) einen freiendseitigen ersten Verriegelungsabschnitt (VA1) aufweist, wobei das erste Bauteil (BT1) zur lösbar klemmenden und/oder formschlüssigen Befestigung zumindest in einem Abschnitt (23) eine Oberseite (23.1) und eine Unterseite (23.2) aufweist, die in dem Abschnitt (23) parallel zueinander verlaufende Ebenen aufspannen, wobei der Abschnitt (23) eine von der Kreisform abweichende Vorlochung oder Öffnung (20) aufweist, dessen Querschnitt an den Längsschnitt des ersten Verriegelungsabschnitts (VA1) angepasst ist, und zwar derart, dass der erste Verriegelungsabschnitt (VA1) durch die Vorlochung (20) hindurchführbar ist und die Befestigungseinrichtung (2) durch Verdrehung um die Mittellängsachse (MA) mit dem ersten Befestigungsabschnitt (BA1) an dem ersten Bauteil (BT1) klemmend und/oder Formschlüssig befestigbar ist, wobei der zweite Befestigungsabschnitt (BA2) einen freiendseitigen zweiten Verriegelungsabschnitt (VA2) aufweist und wobei das zweite Bauteil (BT2) zumindest einen eine Ausnehmung (21) ausbildenden Profilierungsabschnitt (22) aufweist, dessen Querschnitt an den Querschnitt des zweiten Verriegelungsabschnitts (VA2) angepasst ist, und zwar derart, dass zur lösbar klemmenden Befestigung des zweiten Befestigungsabschnittes (BA2) am zweiten Bauteil (BT2) durch Verdrehung des zweiten Verriegelungsabschnittes (VA2) um die Mittelängsachse (MA) der zweite Verriegelungsabschnitt (VA2) zumindest abschnittsweise formschlüssig in der Ausnehmung (21) aufnehmbar ist,
wobei der erste Befestigungsabschnitt (BA1) den freiendseitigen ersten Verriegelungsabschnitt (VA1) mit zumindest einen sich radial von der Mittellängsachse (MA) nach außen erstreckenden Verriegelungselement (25) aufweist,
wobei die Befestigungseinrichtung (2) in ihrem zweiten Verriegelungsabschnitt (VA2) einen Klemmkörper (30) aufweist, der in seinem seitlichen Querschnitt der Verriegelungsposition (VP) an dem dem zweiten Bauteil (BT2) zugewandten Endabschnitt (30.1) die größte Länge (L) aufweist und sich entlang der Mittellängsachse (MA) in Richtung des ersten Befestigungsabschnittes (BA1) im Querschnitt verjüngt,
und wobei der Klemmkörper (30) im Bereich seines freien Endabschnittes (30.1) an zumindest zwei sich gegenüberliegenden Seiten jeweils gerade Anlagenflächen (30.2, 30.3) aufweist.

2. Anordnung nach Anspruch 1, **dadurch gekennzeichnet, dass** der erste Befestigungsabschnitt (BA1) einen sich an den freiendseitigen ersten Verriegelungsabschnitt (VA1) entlang der Mittellängsachse (MA) daran anschließenden ersten Anlageabschnitt (AL1) aufweist, der eine sich senkrecht zur Mittellängsachse erstreckende Aufnahmenut (24) ausbildet.

3. Anordnung nach Anspruch 2, **dadurch gekennzeichnet, dass** die Aufnahmenut (24) zumindest teilweise umlaufend, vorzugsweise vollumlaufend, um die Mittellängsachse (MA) ausgebildet ist und an dem dem ersten Bauteil (BT1) zugewandten Flächenabschnitt eine Anlagefläche (AF) ausbildet.

4. Anordnung nach einem der Ansprüche 1 bis 3, **dadurch gekennzeichnet, dass** in einer Verriegelungsposition (VP) das wenigstens eine Verriegelungselement (25) durch die Vorlochung (20) hindurchgeführt ist und die Befestigungseinrichtung (2) relativ zum ersten Bauteil (BT1) um vorzugsweise 40° Grad von einer Freigabeposition (FP) in die Verriegelungsposition (VP) verdreht ist, und zwar derart, dass das wenigstens eine Verriegelungselement (25) die Vorlochung (20) in der Verriegelungsposition (VP) hintergreift und sich an dem flachen Abschnitt (23) auf der dem zweiten Befestigungsabschnitt (BA2) abgewandten Seite zumindest teilumfänglich um die Vorlochung (20) herum an dem flachen Abschnitt (23) abstützt.

5. Anordnung nach Anspruch 4, **dadurch gekennzeichnet, dass** das wenigstens eine Verriegelungselement (25) durch die Drehung des ersten Verriegelungsabschnitts (VA1) zur klemmenden sowie formschlüssigen Anlage an dem flachen Abschnitt (23) des ersten Bauteils (BT1) auf der dem zweiten Befestigungsabschnitt (BA2) abgewandten Seite gelangt, und zwar derart, dass das erste Bauteil (BT1) in dem flachen Abschnitt (23) auf der dem zweiten Befestigungsabschnitt (BA2) zugewandten Seite gegen die Anlagenfläche (AF) der Aufnahmenut (24) gedrückt ist und der flache Abschnitt (23) zwischen der Anlagefläche (AF) und dem Verriegelungselement (25) klemmend und/oder formschlüssig gehalten ist.

6. Anordnung nach einem der vorangehenden Ansprüche, **dadurch gekennzeichnet, dass** das erste Bauteil (BT1) zumindest in seinem Profilierungsabschnitt (22) einen mittleren sowie zwei seitliche Schenkelabschnitt (22.1, 22.2) aufweist, die im Querschnitt im Wesentlichen C-förmig ausgebildet sind und die Ausnehmung (21) ausbilden.

7. Anordnung nach einem der Anspruch 6, **dadurch gekennzeichnet, dass** sich der Klemmkörper (30) in der Verriegelungsposition (VP) zumindest mit den geraden Anlagenflächen (30.2, 30.3) des freien Endabschnittes (30.1) klemmend gegen die entsprechenden Innenseiten der seitlichen Schenkelabschnitt (22.2) des Profilierungsabschnittes (22) einspreitzt, so dass der Klemmkörper (30) in der Ausnehmung (21) einen Klemmsitz ausbildet.

8. Anordnung nach einem der Ansprüche 6 bis 7, **dadurch gekennzeichnet, dass** der Klemmkörper (30) im seitlichen Querschnitt der Freigabeposition (FP) eine Breite (B) aufweist, die derart an den Querschnitt des Profilierungsabschnittes (22) angepasst ist, dass der Klemmkörper (30) in seiner Freigabeposition (FP) in die durch den Profilierungsabschnitt (22) ausgebildete Ausnehmung (21) einführbar ist.

9. Anordnung nach Anspruch 2, **dadurch gekennzeichnet, dass** der zweite Befestigungsabschnitt (BA2) den freiendseitigen zweiten Verriegelungsabschnitt (VA2) mit zumindest einen sich radial von der Mittellängsachse (MA) nach außen erstreckenden Verriegelungselement (25) aufweist.

10. Anordnung nach Anspruch 9, **dadurch gekennzeichnet, dass** der zweite Befestigungsabschnitt (BA2) einen sich an den freiendseitigen zweiten Verriegelungsabschnitt (VA2) entlang der Mittellängsachse (MA) daran anschließenden zweiten Anlageabschnitt (AL2) aufweist, der eine sich senkrecht zur Mittellängsachse erstreckende Aufnahmenut (24) ausbildet.

11. Anordnung nach Anspruch 10, **dadurch gekennzeichnet, dass** die Aufnahmenut (24) zumindest teilweise umlaufend, vorzugsweise vollumlaufend, um die Mittellängsachse (MA) ausgebildet ist und an dem dem zweiten Bauteil (BT2) zugewandten Flächenabschnitt eine Anlagefläche (AF) ausbildet.

12. Anordnung nach einem der Ansprüche 9 bis 11, **dadurch gekennzeichnet, dass** in einer Verriegelungsposition (VP) das wenigstens eine Verriegelungselement (25) durch die Vorlochung (20) hindurchgeführt ist und die Befestigungseinrichtung (2) relativ zum zweiten Bauteil (BT2) um vorzugsweise 90° Grad von einer Freigabeposition (FP) in die Verriegelungsposition (VP) verdreht ist, und zwar derart, dass das wenigstens eine Verriegelungselement (25) die Vorlochung (20) in der Verriegelungsposition (VP) hintergreift und sich an dem flachen Abschnitt (23) auf der dem ersten Befestigungsabschnitt (BA1) abgewandten Seite zumindest teilumfänglich um die Vorlochung (20) herum an dem flachen Abschnitt (23) abstützt.

13. Anordnung nach Anspruch 12, **dadurch gekennzeichnet, dass** das wenigstens eine Verriegelungselement (25) durch die Drehung des zweiten Verriegelungsabschnitts (VA2) zur klemmenden sowie kontaktschlüssigen Anlage an dem flachen Abschnitt (23) des zweiten Bauteils (BT2) auf der dem ersten Befestigungsabschnitt (BA1) abgewandten Seite gelangt, derart, dass das zweite Bauteil (BT2) in dem flachen Abschnitt (23) auf der dem ersten Befestigungsabschnitt (BA1) zugewandten Seite gegen die Anlagenfläche (AF) der Aufnahmenut (24) gedrückt ist und der flache Abschnitt (23) zwischen der Anlagefläche (AF) und dem Verriegelungselement (25) klemmend gehalten ist.

14. Anordnung nach Anspruch 1, **dadurch gekennzeichnet, dass** das zweite Bauteil (BT2) zumindest in seinem Profilierungsabschnitt (22) einen mittleren sowie zwei seitliche Schenkelabschnitt (22.1, 22.2) aufweist, die im Querschnitt im Wesentlichen C-förmig ausgebildet sind und die Ausnehmung (21) ausbilden.

15. Anordnung nach einem der Ansprüche 1 oder 14, **dadurch gekennzeichnet, dass** sich der Klemmkörper (30) in der Verriegelungsposition (VP) zumindest mit den geraden Anlagenflächen (30.2, 30.3) des freien Endabschnittes (30.1) klemmend gegen die entsprechenden Innenseiten der seitlichen Schenkelabschnitt (22.2) des Profilierungsabschnittes (22) einspreitzt, so dass der Klemmkörper (30) in der Ausnehmung (21) einen Klemmsitz ausbildet.

16. Anordnung nach einem der Ansprüche 1, oder 14 bis 15, **dadurch gekennzeichnet, dass** der Klemmkörper (30) im seitlichen Querschnitt der Freigabeposition (FP) eine Breite (B) aufweist, die derart an den Querschnitt des Profilierungsabschnittes (22) angepasst ist, dass der Klemmkörper (30) in seiner Freigabeposition (FP) in die durch den Profilierungsabschnitt (22) ausgebildete Ausnehmung (21) einführbar ist.

## Claims

1. Assembly for detachably connecting at least two components (BT1, BT2) by means of a fastening device (2), wherein the fastening device (2) comprises a first and a second fastening portion (BA1, BA2), each extending along a central longitudinal axis (MA) of the securing device (2) and arranged opposite one another, wherein the first component (BT1) of the assembly, by means of the first fastening portion (BA1), and the second component of the assembly (BT2), by means of the second fastening portion (BA2), can be connected to one another, wherein the first fastening portion (BA1) comprises a first locking portion (VA1) on the free-end side, wherein the first component (BT1) has an upper side (23.1) and a lower side (23.2) in at least one portion (23), so as to form a detachable clamping and/or positive-fit (interlocking) connection, which span planes running parallel to one another in the portion (23), wherein the portion (23) comprises a preliminary hole or opening (20) which deviates from a circular shape, and of which the cross-section is matched to the longitudinal section of the first locking portion (VA1), and specifically in such a way that the first locking portion (VA1) can be fed through the preliminary hole (20), and, by rotation about the central longitudinal axis (MA), the securing device (2) can be fastened with the first fastening portion (BA1) to the first component (BT1) by clamping and/or by positive fit (interlockingly), wherein the second fastening portion (BA2) comprises a second locking portion (VA2) on the free-end side, and wherein the second component (BT2) has at least one profiling portion (22) which forms a cut-out (21), of which the cross-section is matched to the cross-section of the second locking portion (VA2), and specifically in such a way that, for the detachable clamped securing of the second fastening portion (BA2) to the second component (BT2), by the rotation of the second locking portion (VA2) about the central longitudinal axis (MA), the second locking portion (VA2) can be received at least partially interlockingly in the cut-out (21),
wherein the first fastening portion (BA1) comprises the first locking portion (VA1) on the free-end side with at least one locking element (25) extending radially outwards from the central longitudinal axis (MA),
wherein the fastening device (2) comprises in its second locking portion (VA2) a clamping body (30), which in its lateral cross-section of the locking position (VP) has the greatest length (L) at the end section (30.1) facing towards the second component (BT2), and tapers in cross-section along the central longitudinal axis (MA) in the direction of the first fastening portion (BA1), and wherein the clamping body (30) comprises in the region of its free end portion (30.1), on at least two opposing sides, in each case two straight contact surfaces (30.2, 30.3).

2. Assembly according to claim 1, **characterised in that** the first fastening portion (BA1) comprises a first contact portion (AL1), connecting to the first locking section (VA1) on the free-end side along the central longitudinal axis (MA), which forms a receiving slot (24) extending perpendicular to the central longitudinal axis.

3. Assembly according to claim 2, **characterised in that** the receiving slot (24) is formed at least partially circumferentially, and preferably fully circumferentially, about the central longitudinal axis (MA), and forms a contact surface (AF) at the surface portion facing towards the first component (BT1).

4. Assembly according to any one of claims 1 to 3, **characterised in that**, in a locking position (VP), the at least one locking element (25) is fed through the preliminary hole (20), and the fastening device (2) is rotated relative to the first component (BT1) by preferably 40°, from a release position (FP) into the locking position (VP), and specifically in such a way that the at least one locking element (25) engages behind the preliminary hole (20) in the locking position (VP), and is supported on the flat portion (23), on the side facing away from the second fastening portion (BA2), at least partially circumferentially around the preliminary hole (20), on the flat portion (23).

5. Assembly according to claim 4, **characterised in that**, by the rotation of the first locking portion (VA1), the at least one locking element (25) moves into a clamping and interlocking contact with the flat portion (23) of the first component (BT1) on the side facing away from the second fastening portion (BA2), and specifically in such a way that the first component (BT1) in the flat portion (23), on the side facing towards the second fastening portion (BA2), is pressed against the contact surface (AF) of the receiving slot (24), and the flat portion (23) is held by clamping and/or interlocking between the contact surface (AF) and the locking element (25).

6. Assembly according to any one of the preceding claims, **characterised in that** the first component (BT1) comprises, at least in its profiling portion (22), a central limb section and two lateral limb sections (22.1, 22.2), which are formed essentially as C-shaped in cross-section and form the cut-out (21).

7. Assembly according to claim 6, **characterised in that** the clamping body (30), in the locking position (VP) and at least with the straight contact surfaces (30.2, 30.3) of the free end portion (30.1), is spread with clamping effect against the corresponding inner surfaces of the lateral limb portion (22.2) of the profiling portion (22), such that the clamping body (30) forms a clamping seat in the cut-out (21).

8. Assembly according to any one of claims 6 to 7, **characterised in that** the clamping body (30), in the lateral cross-section of the release position (FP), has a width (B) which is matched to the cross-section of the profiling portion (22) in such a way that the clamping body (30), in its release position (FP), can be fed into the cut-out (21) formed by the profiling portion (22).

9. Assembly according to claim 2, **characterised in that** the second fastening portion (BA2) comprises the second locking portion (VA2) on the free-end side, with at least one locking element (25) extending radially outwards from the central longitudinal axis (MA).

10. Assembly according to claim 9, **characterised in that** the second fastening portion (BA2) comprises a second contact surface portion (AL2), connecting to the second locking portion (VA2) on the free-end side, along the central longitudinal axis (MA), which forms a receiving slot (24) extending perpendicular to the central longitudinal axis.

11. Assembly according to claim 10, **characterised in that** the receiving slot (24) is formed at least partially circumferentially, and preferably fully circumferentially, about the central longitudinal axis (MA), and forms a contact surface (AF) on the surface portion facing towards the second component (BT2).

12. Assembly according to any one of claims 9 to 11, **characterised in that**, in a locking position (VP), the at least one locking element (25) is fed through the preliminary hole (20), and the fastening device (2) is rotated relative to the second component (BT2) by preferably 90° from a release position (FP) into the locking position (VP), and specifically in such a way that the at least one locking element (25) engages behind the preliminary hole (20) in the locking position (VP), and is supported at the flat portion (23), on the side facing away from the first fastening portion (BA1), at least partially circumferentially about the preliminary hole (20) on the flat portion (23).

13. Assembly according to claim 12, **characterised in that**, by the rotation of the second locking portion (VA2), the at least one locking element (25) comes into clamping and interlocking contact with the flat portion (23) of the second component (BT2) on the side facing away from the first fastening portion (BA1), in such a way that the second component (BT2), in the flat portion (23), on the side facing towards the first fastening portion (BA1), is pressed against the contact surface (AF) of the receiving slot (24), and the flat portion (23) is held clamped between the contact surface (AF) and the locking element (25).

14. Assembly according to claim 1, **characterised in that** the second component (BT2) comprises, at least in its profiling portion (22), a central and two lateral limb portions (22.1, 22.2), which in cross-section are formed essentially in a C-shape, and form the cut-out (21).

15. Assembly according to any one of claims 1 or 14, **characterised in that** the clamping body (30), in the locking position (VP), spreads at least with the straight contact surfaces (30.2, 30.3) of the free end portion (30.1) in clamping contact against the corresponding inner sides of the lateral limb portion (22.2) of the profiling portion (22), such that the clamping body (30) forms a clamping seat in the cut-out (21).

16. Assembly according to claim 1, or 14 to 15, **characterised in that** the clamping body (30) has a width (B) in the lateral cross-section of the release position (FP) which is matched to the cross-section of the profiling portion (22) in such a way that the clamping body (30), in its release position (FP) can be fed into the cut-out (21) formed by the profiling portion (22).

## Revendications

1. Ensemble destiné à relier de manière amovible au moins deux composants (BT1, BT2) au moyen d'un dispositif de fixation (2), dans lequel le dispositif de fixation (2) présente une première et une seconde section de fixation (BA1, BA2) s'étendant respectivement le long d'un axe longitudinal médian (MA) du dispositif de fixation (2) et se faisant face mutuellement, dans lequel le premier composant (BT1) de l'ensemble, par l'intermédiaire de la première section de fixation (BA1) et le deuxième composant (BT2) de l'ensemble, par l'intermédiaire de la seconde section de fixation (BA2), peuvent être reliés l'un à l'autre, dans lequel la première section de fixation (BA1) présente une première section de verrouillage (VA1) côté extrémité libre, dans lequel le premier composant (BT1) présente, pour la fixation amovible par serrage et/ou par complémentarité de forme au moins dans une section (23), un côté supérieur (23.1) et un côté inférieur (23.2), qui établissent des plans s'étendant de manière parallèle les uns par rapport aux autres dans la section (23), dans lequel la section (23) présente une pré-perforation ou une ouverture (20) s'écartant de la forme circulaire, dont la section transversale est adaptée à la section longitudinale de la première section de verrouillage (VA1), et ce de telle manière que la première section de verrouillage (VA1) peut être guidée à travers la pré-perforation (20) de part en part et le dispositif de fixation (2) peut être fixé par serrage et/ou par complémentarité de forme sur le premier composant (BT1) à la première section de fixation (BA1) par rotation autour de l'axe longitudinal médian (MA), dans lequel la seconde section de fixation (BA2) présente une seconde section de verrouillage (VA2) côté extrémité libre, et dans lequel le deuxième composant (BT2) présente au moins une section de profilage (22) réalisant un évidement (21), dont la section transversale est adaptée à la section transversale de la seconde section de verrouillage (VA2), et ce de telle manière que la seconde section de verrouillage (VA2) peut être reçue dans l'évidement (21) au moins par endroits par complémentarité de forme pour la fixation amovible par serrage de la seconde section de fixation (BA2) sur le deuxième composant (BT2) par rotation de la seconde section de verrouillage (VA2) autour de l'axe longitudinal médian (MA),
dans lequel la première section de fixation (BA1) présente la première section de verrouillage (VA1) côté extrémité libre avec au moins un élément de verrouillage (25) s'étendant radialement depuis l'axe longitudinal médian (MA) vers l'extérieur,
dans lequel le dispositif de fixation (2) présente dans sa seconde section de verrouillage (VA2) un corps de serrage (30), qui présente la plus grande longueur (L) sur la section d'extrémité (30.1) tournée vers le deuxième composant (BT2) dans sa section transversale latérale de la position de verrouillage (VP) et se rétrécit dans la section transversale en direction de la première section de fixation (BA1) le long de l'axe longitudinal médian (MA),
et dans lequel le corps de serrage (30) présente dans la zone de sa section d'extrémité (30.1) libre sur au moins deux côtés se faisant face, respectivement des surfaces d'appui droites (30.2, 30.3).

2. Ensemble selon la revendication 1, **caractérisé en ce que** la première section de fixation (BA1) présente une première section d'appui (AL1) se raccordant à la première section de verrouillage (VA1) côté extrémité libre le long de l'axe longitudinal médian (MA), laquelle réalise une rainure de réception (24) s'étendant de manière perpendiculaire par rapport à l'axe longitudinal médian.

3. Ensemble selon la revendication 2, **caractérisé en ce que** la rainure de réception (24) est réalisée au moins en partie en périphérie, de préférence en totalité en périphérie, autour de l'axe longitudinal médian (MA) et réalise une surface d'appui (AF) sur la section de surface tournée vers le premier composant (BT1).

4. Ensemble selon l'une quelconque des revendications 1 à 3, **caractérisé en ce que** l'au moins un élément de verrouillage (25) est guidé à travers la pré-perforation (20) de part en part dans une position de verrouillage (VP) et le dispositif de fixation (2) est tourné par rapport au premier composant (BT1) de préférence de 40 degrés depuis une position de déverrouillage (FP) dans la position de verrouillage (VP), et ce de telle manière que l'au moins un élément de verrouillage (25) vient en prise par l'arrière avec la pré-perforation (20) dans la position de verrouillage (VP) et prend appui sur la section plate (23) au moins en partie en périphérie tout autour de la pré-perforation (20) sur le côté opposé à la seconde section de fixation (BA2) sur la section plate (23).

5. Ensemble selon la revendication 4, **caractérisé en ce que** l'au moins un élément de verrouillage (25) parvient, sur le côté opposé à la seconde section de fixation (BA2), en appui par serrage ainsi que par complémentarité de forme sur la section plate (23) du premier composant (BT1) par la rotation de la première section de verrouillage (VA1), et ce de telle manière que le premier composant (BT1) est poussé contre la surface d'appui (AF) de la rainure de réception (24) sur le côté tourné vers la seconde section de fixation (BA2) dans la section plate (23) et la section plate (23) est maintenue par serrage et/ou par complémentarité de forme entre la surface d'appui (AF) et l'élément de verrouillage (25).

6. Ensemble selon l'une quelconque des revendications précédentes, **caractérisé en ce que** le premier composant (BT1) présente au moins dans sa section de profilage (22) une section de branche centrale ainsi que deux sections de branche latérales (22.1, 22.2), qui sont réalisées dans la section transversale sensiblement en forme de C et réalisent l'évidement (21).

7. Ensemble selon la revendication 6, **caractérisé en ce que** le corps de serrage (30) s'écarte en serrant contre les côtés intérieurs correspondants de la section de branche latérale (22.2) de la section de profilage (22) au moins avec les surfaces d'appui droites (30.2, 30.3) de la section d'extrémité libre (30.1) dans la position de verrouillage (VP) de sorte que le corps de serrage (30) réalise un ajustement serré dans l'évidement (21).

8. Ensemble selon l'une quelconque des revendications 6 à 7, **caractérisé en ce que** le corps de serrage (30) présente dans la section transversale latérale de la position de déverrouillage (FP) une largeur (B), qui est adaptée de telle manière à la section transversale de la section de profilage (22) que le corps de serrage (30) peut être introduit, dans sa position de déverrouillage (FP), dans l'évidement (21) réalisé par la section de profilage (22).

9. Ensemble selon la revendication 2, **caractérisé en ce que** la deuxième section de fixation (BA2) présente la deuxième section de verrouillage (VA2) côté extrémité libre avec au moins un élément de verrouillage (25) s'étendant radialement depuis l'axe longitudinal médian (MA) vers l'extérieur.

10. Ensemble selon la revendication 9, **caractérisé en ce que** la deuxième section de fixation (BA2) présente une deuxième section d'appui (AL2) se raccordant à la deuxième section de verrouillage (VA2) côté extrémité libre le long de l'axe longitudinal médian, laquelle réalise une rainure de réception (24) s'étendant de manière perpendiculaire par rapport à l'axe longitudinal médian.

11. Ensemble selon la revendication 10, **caractérisé en ce que** la rainure de réception (24) est réalisée au moins en partie en périphérie, de préférence en totalité en périphérie, autour de l'axe longitudinal médian (MA) et réalise une surface d'appui (AF) sur la section de surface tournée vers le deuxième composant (BT2).

12. Ensemble selon l'une quelconque des revendications 9 à 11, **caractérisé en ce que** dans une position de verrouillage (VP), l'au moins un élément de verrouillage (25) est guidé à travers la pré-perforation (20) de part en part, et le dispositif de fixation (2) est tourné par rapport au deuxième composant (BT2) de préférence de 90 degrés depuis une position de déverrouillage (FP) dans la position de verrouillage (VP), et ce de telle manière que l'au moins un élément de verrouillage (25) vient en prise par l'arrière avec la pré-perforation (20) dans la position de verrouillage (VP) et prend appui sur la section plate (23) au moins en partie en périphérie tout autour de la pré-perforation (20) sur le côté opposé à la première section de fixation (BA1) sur la section plate (23).

13. Ensemble selon la revendication 12, **caractérisé en ce que** l'au moins un élément de verrouillage (25) parvient en appui par serrage ainsi que par contact sur la section plate (23) du deuxième composant (BT2) sur le côté opposé à la première section de fixation (BA1) par la rotation de la seconde section de verrouillage (VA2) de telle manière que le deuxième composant (BT2) est poussé contre la surface d'appui (AF) de la rainure de réception (24) sur le côté tourné vers la première section de fixation (BA1) dans la section plate (23) et la section plate (23) est maintenue par serrage entre la surface d'appui (AF) et l'élément de verrouillage (25).

14. Ensemble selon la revendication 1, **caractérisé en ce que** le deuxième composant (BT2) présente au moins dans sa section de profilage (22) une section de branche centrale ainsi que deux sections de branche latérales (22.1, 22.2), qui sont réalisées dans la section transversale sensiblement en forme de C et réalisent l'évidement (21).

15. Ensemble selon l'une quelconque des revendications 1 ou 14, **caractérisé en ce que** le corps de serrage (30) s'écarte, dans la position de verrouillage (VP), au moins avec les surfaces d'appui plates (30.2, 30.3) de la section d'extrémité libre (30.1) par serrage contre les côtés intérieurs correspondants de la section de branche latérale (22.2) de la section de profilage (22) de sorte que le corps de serrage (30) réalise un ajustement serré dans l'évidement (21).

16. Ensemble selon l'une quelconque des revendications 1 ou 14 ou 15, **caractérisé en ce que** le corps de serrage (30) présente dans la section transversale latérale de la position de déverrouillage (FP) une largeur (B), qui est adaptée de telle manière à la section transversale de la section de profilage (22) que le corps de serrage (30) peut être introduit, dans sa position de déverrouillage (FP), dans l'évidement (21) réalisé par la section de profilage (22).
